**Europäisches Patentamt**

**European Patent Office**

**Office européen des brevets**

(19)

(11) Publication number : **0 494 719 A1**

## (12) EUROPEAN PATENT APPLICATION

(21) Application number : **92200055.9**

(22) Date of filing : **10.01.92**

(51) Int. Cl.⁵ : **F16B 37/00, F16C 11/06**

(30) Priority : **11.01.91 GB 9100621**

(43) Date of publication of application :
**15.07.92 Bulletin 92/29**

(84) Designated Contracting States :
**DE ES FR GB IT NL SE**

(71) Applicant : **BRITISH AEROSPACE PUBLIC LIMITED COMPANY**
**11 Strand**
**London WC2N 5JT (GB)**

(72) Inventor : **Williams, George H.**
**British Aerospace Ltd., New Techn.Cent.,**
**Airbus Di**
**Filton House, Bristol BS99 7AR (GB)**
Inventor : **Peirce, Robert J.**
**British Aerospace Ltd., New Techn.Cent.,**
**Airbus Di**
**Filton House, Bristol BS99 7AR (GB)**

(54) **Secondary securing arrangement for spigot mounted components.**

(57)   A secondary securing arrangement (19) for securing a first component (11) to a second component (13) when primary securing means (17) is inadvertently removed. The first component (11) includes a spigot (12) for mounting said second component (13), said spigot (12) being adapted to receive said second component (13), said spigot (12) being adapted to receive said primary securing means (17) when said second component (13) is mounted upon said spigot (12) and said secondary securing means (19), said secondary securing means (19) including one or more protrusions (24) projecting outwardly from said spigot (12) and lying closely adjacent said second component (13), the arrangement being such that the said protrusions (24) will prevent separation of said second component (13) from said first component (11) when said primary securing means (17) is inadvertently removed.

Fig.1

EP 0 494 719 A1

This invention relates to secondary securing arrangements for ensuring the retention of a spigot mounted component in the event of loss of primary securing means.

In certain applications, for example the pivotal attachment of an aircraft wing flap to its supporting carriage, loss of primary securing means for whatever reason, may have catastrophic results. As a consequence there is a requirement for secondary securing means which is effective in maintaining the in-service integrity of a flight system but which is lightweight and compact. It is the object of the present invention to provide such an arrangement.

According to the present invention there is provided a secondary securing arrangement for securing a first component to a second component when primary securing means is inadvertently removed, said first component including a spigot for mounting said second component said spigot adapted to receive said primary securing means when said second component is mounted upon said spigot and said secondary securing means, said secondary securing means including one or more protrusions projecting outwardly from said spigot and lying closely adjacent said second component, the arrangement being such that said protrusions will prevent separation of said second component from said first component when said primary securing means is inadvertently removed.

The spigot may be recessed to receive said secondary securing means and said secondary securing means may have spring-like properties and comprise a hollow cylindrical body having two or more outwardly projecting protrusions and may be arranged such that when positioned upon said spigot, said protrusions are compressed inwardly when the second component is installed but then spring back outwardly to form stops to prevent separation of second component when, in use, said primary securing means is removed.

The secondary securing arrangement may include a threaded sleeve screwed into position on the spigot positioned behind the secondary securing means to locate the same in position on the spigot.

One embodiment of the invention will now be described by way of example only and with reference to the following drawings in which :-

Figure 1 illustrates a longitudinal cross-section through a spigot mounted component assembly in accordance with the invention.

Figure 2 shows pictorially, a secondary securing device for use in accordance with the invention.

Figures 3, 4 and 5 illustrate, in localised schematic cross-section, the secondary securing arrangement at three different stages.

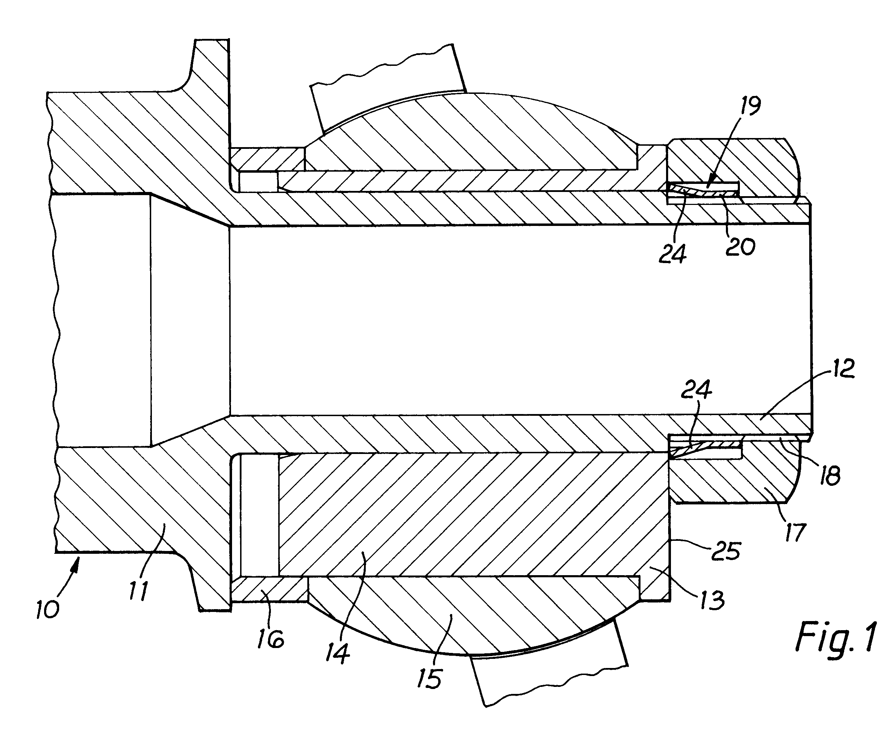

Referring to the drawings, Figure 1 illustrates, in cross-section, a machined component 10 comprising a barrel-shaped body portion 11 and a spigot 12 extending therefrom. Mounted upon the spigot is a self-aligning bearing assembly 13 which includes a spherical ball eccentric 14 and a spherical bearing 15. The self-aligning bearing assembly 13 is clamped in position upon the spigot 12 by means of a concentric sleeve 16 and a retaining nut 17 engaging the threaded portion 18 of the spigot. Generally, the nut will be locked by well known means, not illustrated here.

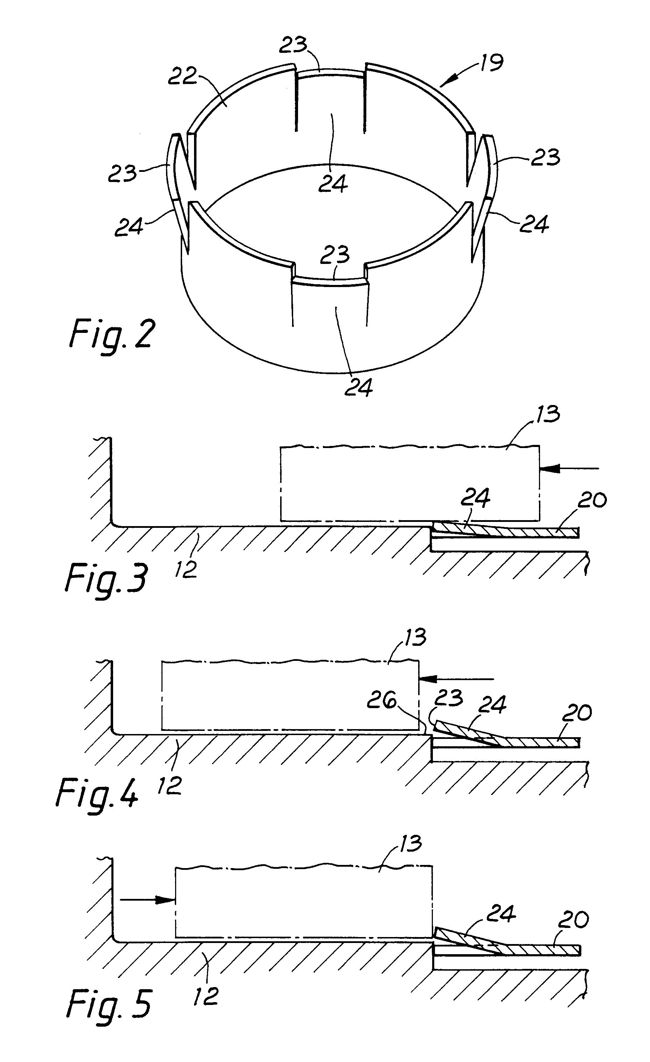

The assembly further includes a concentric secondary securing device 19 as illustrated in more detail in Figures 2-5 inclusive. In the preferred arrangement of Figure 1 a screw-threaded portion 18 is of length sufficient to accommodate the nut 17 but also a threaded sleeve 20 the purpose of which is to allow the fitting and positive location of the securing device 19 prior to fitting the nut 17.

Figure 2 illustrates pictorially the securing device 19 comprising a cylindrical body 22 having an internal diameter enabling it to at least pass over the screw-thread portion 18. The cylindrical body incorporates four equally pitched tangs 24 each projecting outwardly to form a stop face 23 the securing device having spring-like properties.

Referring to Figure 3 it will be seen that with the securing device 19 located in position by means of the threaded sleeve 20, the bearing assembly 13 is positioned upon the spigot in the direction of the arrow, insertion overcoming the resistance of the tangs 24 which, when the bearing assembly 13 is in final position, spring up such that their stop faces 23 extend above the spigot surface 26 as shown in Figure 4.

Figure 5, in conjunction with Figure 1 illustrates the secondary securing operation in accordance with the invention. In normal service the bearing assembly 13 is held in place by the nut 17 and which would normally be secured by conventional locking means, e.g. wire locking. In the unlikely event that the nut inadvertently becomes detached from the spigot, the lack of secondary securing and retaining means could result in separation of the bearing assembly 13 from the spigot with catastrophic results. In the embodiment described which relates to an aircraft wing flap, without the benefit of secondary securing the flap could become detached from its mounting resulting in jamming or possible loss of the aircraft. The present invention overcomes this hazard. With the nut removed, any tendency of the bearing assembly to move outwardly along the spigot will be restrained by engagement with the securing device 19 to give an effective secondary securing action.

**Claims**

1. A secondary securing arrangement (19) for securing a first component (11) to a second component (13) when primary securing means (17) is inadvertently removed, said first component including a spigot (12) for mounting said second component (13), said spigot (12) adapted to receive said primary securing means (17) when said second component (13) is mounted upon said spigot and said secondary securing means (19), characterised in that said secondary securing means includes one or more protrusions (24) projecting outwardly from said spigot (12) and lying closely adjacent said second component (13), the arrangement being such that said protrusions (24) will prevent separation of said second component (13) from said first component (11) when said primary securing means (17) is inadvertently removed.

2. A secondary securing arrangement according to Claim 1 in which said spigot (12) is recessed to receive said secondary securing means (19) and said secondary securing means having spring like properties and comprising a hollow cylindrical body (22) having two or more outwardly projecting protrusions (24) and being arranged such that when positioned upon said spigot said protrusions are compressed inwardly when the second component (13) is installed but then spring back outwardly to form stops to prevent separation of said second component (13) when, in use, said primary securing means (17) is removed.

3. A secondary securing arrangement according to claim 2 including a threaded sleeve (20) screwed into position on the spigot (12) and positioned behind the secondary securing means (19) to locate same in position on the spigot.

Fig.1

*Fig. 2*

*Fig. 3*

*Fig. 4*

*Fig. 5*

European Patent Office

**EUROPEAN SEARCH REPORT**

Application Number

EP 92 20 0055

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 773 280 (BAUMGARTEN) <br> * column 2, line 22 - column 3, line 27; figures 1-8 * | 1-3 | F16B37/00 <br> F16C11/06 |
| A | GB-A-974 115 (CARR FASTENER CO. LTD.) <br> * page 1, line 9 - line 32 * <br> * page 1, line 46 - page 2, line 17; figures 1-3 * | 1-2 | |
| A | US-A-3 961 855 (BASILE) <br> * column 2, line 31 - line 34 * <br> * column 3, line 19 - line 56; figures 1-2 * | 1-2 | |

TECHNICAL FIELDS SEARCHED (Int. Cl.5 )

F16C
F16B
F16D
B64C

The present search report has been drawn up for all claims

| Place of search | Date of completion of the search | Examiner |
|---|---|---|
| THE HAGUE | 11 MARCH 1992 | RIVERO C.G. |